Europäisches Patentamt

(19) European Patent Office

Office européen des brevets

(11) Veröffentlichungsnummer: **0 057 821**
**B1**

(12) **EUROPÄISCHE PATENTSCHRIFT**

(45) Veröffentlichungstag der Patentschrift:
14.11.84

(51) Int. Cl.³: **B 60 S 5/00,** B 60 Q 9/00

(21) Anmeldenummer: 82100211.0

(22) Anmeldetag: 14.01.82

(54) Service-Intervall-Anzeigevorrichtung für Kraftfahrzeuge und Schaltanordnung für eine derartige Anzeigevorrichtung.

(30) Priorität: 06.02.81 DE 3104197

(43) Veröffentlichungstag der Anmeldung:
18.08.82 Patentblatt 82/33

(45) Bekanntmachung des Hinweises auf die Patenterteilung:
14.11.84 Patentblatt 84/46

(84) Benannte Vertragsstaaten:
DE FR GB IT SE

(56) Entgegenhaltungen:
US - A - 1 749 365

(73) Patentinhaber: BAYERISCHE MOTOREN WERKE
Aktiengesellschaft, Postfach 40 02 40 Petuelring 130,
D-8000 München 40 (DE)

(72) Erfinder: Mühlberger, Heinz, Dipl. Ing.,
Donauschwabenstrasse 6, D-8057 Eching (DE)
Erfinder: Starmühler, Erwin, Dipl. Ing.,
Schmuzerstrasse 1, D-8000 München 70 (DE)
Erfinder: Weishaupt, Walter, Ing. grad.,
Memlingstrasse 12, D-8000 München 71 (DE)
Erfinder: Flohr, Peter, Harthauser Strasse 23,
D-8000 München 90 (DE)
Erfinder: Bourauel, Fritz, Am Grohplatz 1,
D-8000 München 45 (DE)

(74) Vertreter: Bullwein, Fritz Bayerische Motoren Werke
Aktiengesellschaft, Postfach 40 02 40 -
AJ-23 Petuelring 130, D-8000 München 40 (DE)

# Beschreibung

Die Erfindung bezieht sich auf eine Service-Intervall-Anzeigevorrichtung für Kraftfahrzeuge, die nach Zurücklegen eines Sollwegs ein Signal liefert.

Es sind derartige Anzeigevorrichtungen bekannt, bei denen nach Zurücklegen des Sollwegs eine Kontrolleuchte allein oder zusätzlich ein akustisches Signal erscheint. Diese Vorrichtungen besitzen den Nachteil, dass der Fahrer von der Notwendigkeit eines Services überrascht wird, da er vor Erscheinen des Signals keine Aussage darüber erhält, wann der Service durchgeführt werden muss.

Der Erfindung liegt die Aufgabe zugrunde, eine Anzeigevorrichtung der eingangs genannten Art zu schaffen, bei der mit geringem Aufwand eine klare Aussage darüber geliefert wird, wann ein Service erforderlich werden wird.

Die Erfindung löst diese Aufgabe dadurch, dass der Sollweg in mehrere, gleich grosse Sollweg-Intervalle aufgeteilt ist und dass jedem dieser Intervalle ein eigenes Signalelement zugeordnet ist, das am Ende des Intervalls seinen Schaltzustand ändert. Anhand der Signalelemente kann abgelesen werden, wann der nächste Service fällig wird. Dadurch kann ein Service beispielsweise vorzeitig, beispielsweise vor einer längeren Reise, durchgeführt werden. Andererseits kann einigermassen genau entschieden werden, dass mit einem Service noch bis nach einer derartigen längeren Fahrt gewartet werden kann.

Die Signalelemente können akustischer und/oder optischer Art sein. Letzteres bietet den Vorteil, dass zwischen den einzelnen Sollweg-Intervallen deutlich unterschieden werden kann. Eine besonders vorteilhafte Ausbildung derartiger optischer Signalelemente besteht in Kontrolleuchten, die am Ende des Sollweg-Intervalls erlöschen. Die noch nicht erloschenen Kontrolleuchten zeigen dem Fahrer ähnlich einer „Gut"-Anzeige an, wie weit er noch bis zum nächsten Service fahren kann.

Um zu vermeiden, dass die Kontrolleuchten während einer Fahrt ständig eingeschaltet sind und möglicherweise den Fahrer irritieren und um andererseits bei jeder Fahrt die bereits durchfahrene und insbesondere die bis zu einem Service noch mögliche Fahrtstrecke anzuzeigen, können die Kontrolleuchten vor dem Ende ihres Sollweg-Intervalls bei Schliessen des Zündstromkreises eingeschaltet und bei oder unmittelbar nach dem Anlassen des Fahrzeugmotors ausgeschaltet werden. Das Ausschalten kann abhängig von der Motordrehzahl oder auch mit Hilfe eines Öldruckschalters oder in sonstiger Weise, beispielsweise wie die Ladekontrolleuchte, erfolgen.

Mit Hilfe einer Leuchtschrift, die gleichzeitig mit dem Erlöschen der Kontrolleuchte für das letzte Sollweg-Intervall, d.h. am Ende des Sollwegs, bleibend eingeschaltet wird, kann auf die Notwendigkeit eines Services besonders deutlich hingewiesen werden.

Anstelle einer Leuchtschrift oder zusammen mit dieser kann auch eine Warnanzeige bleibend eingeschaltet werden. Beide Anzeigen zusammen machen besonders dringlich auf einen Service aufmerksam.

Die Warnanzeige kann eine Warnleuchte mit von den Kontrolleuchten unterschiedlicher Farbe sein. Diese Farbe kann beispielsweise rot oder gelb sein und damit einen besonderen Aufforderungscharakter, im Gegensatz zu den beispielsweise grün ausgeführten Kontrolleuchten, besitzen.

Wird ein Service nach Durchfahren des Sollwegs nicht sofort durchgeführt, so können in dem sich anschliessenden Überziehungsweg nach gleichen Intervallen weitere Warnleuchten eingeschaltet werden. Der Fahrer erhält damit eine Aussage, um wieviel er den Sollweg bereits überschritten hat.

Die Wirkung der Warnleuchten kann dadurch verstärkt werden, dass die Überziehungsweg-Intervalle etwa halb so gross wie die Sollweg-Intervalle sind. Die Warnleuchten erscheinen dann doppelt so schnell, wie die Kontrolleuchten ihren Schaltzustand ändern, und haben zur Folge, dass nach relativ kurzem Überziehungsweg bereits mehrere Warnleuchten eingeschaltet sind.

Um auch bei Kraftfahrzeugen, die relativ wenig gefahren werden, auf die Notwendigkeit eines Services hinzuweisen – viele der durchgeführten Servicearbeiten sind primär durch Alterungserscheinungen bedingt und nur in zweiter Linie von der zurückgelegten Wegstrecke abhängig –, wird als weitere Bezugsgrösse neben der zurückgelegten Wegstrecke die Laufzeit eingeführt. Dem Sollweg wird dabei eine Sollzeit zugeordnet und in eine der Anzahl von Sollweg-Intervallen gleiche Anzahl von Sollzeit-Intervallen aufgeteilt. Der Schaltzustand der Signalelemente wird dann auch geändert, wenn das jeweilige Sollzeit-Intervall vor dem entsprechenden Sollweg-Intervall abgelaufen ist. Durch eine entsprechende Wahl von Sollweg und Sollzeit wird erreicht, dass die Änderung des Schaltzustands der Signalelemente durch Ablauf der Sollzeit-Intervalle nur in den Fällen erfolgt, in denen die zurückgelegte Wegstrecke unterdurchschnittlich gering ist. Bestimmend für die Anzeigevorrichtung bleibt somit meist der zurückgelegte Weg. Auf diese Weise lässt sich erreichen, dass zusätzlich zu den Kraftfahrzeugen mit mindestens durchschnittlich zurückgelegtem Weg auch bei den Kraftfahrzeugen, die relativ wenig gefahren werden, auf einen erforderlichen Service hingewiesen wird.

Da der bei Ablauf der Sollzeit erforderliche Service von dem nach Zurücklegen des Sollwegs notwendigen Service in der Regel verschieden ist – in letzterem Fall wird nur ein Ölservice erforderlich sein –, kann bei Ablauf der Sollzeit eine Leuchtschrift eingeschaltet werden, die von der nach Zurücklegen des Sollwegs eingeschalteten Leuchtschrift verschieden ist. Diese Unterscheidung kann beispielsweise durch die Leuchtschriften „Ölservice" nach dem Sollweg und „Inspektion" nach der Sollzeit erreicht werden.

Wie bei Überschreiten des Sollwegs kann auch bei Überschreiten der Sollzeit eine Warnanzeige bleibend eingeschaltet werden.

Diese Warnanzeige kann in Warnleuchten für die Überziehungsweg-Intervalle bestehen. Hierzu sind den Überziehungsweg-Intervallen gleiche Überziehungszeit-Intervalle zugeordnet, die etwa halb so gross wie die Sollzeit-Intervalle sind und bei deren Ablauf vor Zurücklegen des zugehörigen Überziehungsweg-Intervalls ebenfalls diese Warnleuchten eingeschaltet werden. Durch diese Halbierung der Zeit-Intervalle nach Ablauf der Sollzeit ergibt sich auch bei wenig gefahrenen Kraftfahrzeugen wesentlich schneller eine Verstärkung der Warnfunktion.

In den meisten Fällen wird eine Wartung lange vor Ablauf der Sollzeit nach Zurücklegen des Sollwegs durchgeführt. Als Beispiel mag gelten für die Sollzeit ein Zeitraum von elf Monaten und für den Sollweg eine Strecke von 10 000 km. Die Wartung besteht in diesem Fall in einem Ölservice. Nach etwa dem Doppelten des Sollwegs, dem sogenannten Maximalweg, ist meist eine umfangreichere Wartung erforderlich. Diese Wartung entspricht im Umfang etwa der Wartung nach Ablauf der Sollzeit. Um auf eine derartige Wartung mit Hilfe der Anzeigevorrichtung besonders deutlich hinzuweisen, wird nach Durchführen einer Wartung vor Ablauf der Sollzeit, d.h. in der Regel nach Zurücklegen des Sollwegs, die Differenz des zurückgelegten Wegs von einem gegenüber dem Sollweg etwa doppelt so grossen Maximalweg in gleiche Differenzweg-Intervalle aufgeteilt, deren Anzahl gleich der Anzahl der Sollweg-Intervalle ist und die an deren Stelle treten. Unmittelbar nach Durchführen einer derartigen Wartung ergibt sich, dass der Schaltzustand der Kontrolleuchten durch die abgelaufene Zeit, die unverändert berücksichtigt wird, bestimmt ist. Im weiteren Verlauf wird der Schaltzustand der Kontrolleuchten dann aber wieder häufig durch den zurückgelegten Weg bestimmt werden.

Wie nach Zurücklegen des Sollwegs und nach Ablauf der Sollzeit kann auch nach Zurücklegen des Maximalwegs die Warnanzeige eingeschaltet werden. Der Fahrer erhält dann auch in diesem Fall eine präzise Aussage darüber, um wieviel er den Maximalweg überschritten hat.

Zusätzlich kann nach Zurücklegen des Maximalwegs dieselbe Leuchtschrift wie bei Ablauf der Sollzeit eingeschaltet werden. Auf diese Weise wird berücksichtigt, dass die in beiden Fällen durchzuführende Wartung weitgehend gleich ist.

Bei einer schaltungsmässig besonders einfachen Ausführung einer derartigen Anzeigevorrichtung sind die Kontrolleuchten an den entsprechenden Ausgängen eines Weg- und eines Zeitzählers über ODER-Glieder angeschlossen. Dadurch ist sichergestellt, dass der Schaltzustand der Kontrolleuchten durch den ersten der beiden zugeordneten Ausgängen der beiden Zähler verändert wird und dass die anschliessende Änderung des anderen Ausgangs keinen Einfluss auf den Schaltzustand der Kontrolleuchte hat.

Eine vorteilhafte Realisierung derartiger Zähler besteht in Schieberegistern, die bei Zurücklegen der Sollweg- bzw. Sollzeit-Intervalle getaktet sind.

Zusätzlich zu den Kontrolleuchten können auch die Warnleuchten an weiteren Ausgängen der Schieberegister über ODER-Glieder angeschlossen sein, wobei die Schieberegister auch bei Zurücklegen der Überziehungsweg- bzw. Überziehungszeit-Intervalle getaktet sind.

Nach Durchführen einer kleinen Wartung vor Ablauf der Sollzeit kann der nun massgebende Maximalweg dadurch berücksichtigt werden, dass bei dieser Wartung die Kontrolleuchten und die Warnleuchten auf die Ausgänge eines weiteren Paares von Schieberegistern geschaltet werden, von denen das eine bei jedem Differenzweg und jedem Überziehungsweg-Intervall und das andere entsprechend bei jedem Sollzeit- und jedem Überziehungszeit-Intervall getaktet ist.

Schaltungsmässig besonders einfach lässt sich die Umschaltung der Kontroll- und Warnleuchten auf die Schieberegisterpaare mit einer bistabilen Kippschaltung durchführen, deren beide Ausgänge UND-Glieder für die Ausgänge der Schieberegister steuern und an deren beide Eingänge RC-Glieder mit unterschiedlichen Zeitkonstanten angeschlossen sind, die durch einen gemeinsamen Schalter gleichzeitig aktiviert werden. Das RC-Glied mit der kleineren Schaltzeit steuert beispielsweise die Schieberegister für die Sollweg- und Sollzeit-Intervalle und die zugehörigen Überziehungs-Intervalle, während das RC-Glied mit grösserer Zeitkonstante die beiden Schieberegister für die Differenzweg-Intervalle und die Sollzeit-Intervalle und die zugehörigen Überziehungs-Intervalle steuert.

Zur Taktsteuerung der Schieberegister kann ein Multiplexer dienen, der die den Sollweg-, Überziehungsweg- oder Differenzweg-Intervallen bzw. den Sollzeit- und Überziehungszeit-Intervallen entsprechenden Ausgänge von zugehörigen Vorteilern aktiviert. Die Vorteiler besitzen somit Ausgänge, die im Abstand der entsprechenden Weg- und Zeit-Intervalle ein Taktsignal liefern.

Um die Aussage der Anzeigevorrichtung zu verfeinern, kann anstelle des unveränderten Wegs auch ein Wegsignal berücksichtigt werden, das entsprechend der Belastung des Fahrzeugmotors bewertet ist. Diese Ausgestaltung ist im Patent EP-B Nr. 57820 beansprucht. Eine überdurchschnittliche Belastung des Fahrzeugmotors hat zur Folge, dass der registrierte Weg grösser als der tatsächlich zurückgelegte Weg ist. Eine erforderliche Wartung wird somit entsprechend dem tatsächlichen Erfordernis früher angezeigt, als dies ohne Berücksichtigung der Motorbelastung der Fall wäre.

Die Belastung des Fahrzeugmotors kann dadurch berücksichtigt werden, dass die Bewertung abhängt beispielsweise von der Drehzahl, der Kühlwassertemperatur, der Motoröltemperatur und/oder dem momentanen Kraftstoffverbrauch. Diese und weitere Betriebsparameter können sowohl einzeln als auch in beliebiger Kombination berücksichtigt werden.

Die Erfindung ist anhand eines in der Zeichnung dargestellten Ausführungsbeispiels weiter erläutert. Es zeigen:

Fig. 1 ein Diagramm, anhand dessen die verwendeten Bezeichnungen für Weg und Zeit erläutert werden,

Fig. 2 eine Service-Intervall-Anzeigevorrichtung für Kraftfahrzeuge in ihren verschiedenen möglichen Zuständen,

Fig. 3 ein Weg/Zeit-Diagramm für Fahrverhalten und mit den auftretenden Zuständen der Anzeigevorrichtung, und

Fig. 4, 5 und 6 eine Schaltanordnung für eine derartige Anzeigevorrichtung bzw. Einzelheiten von Teilen dieser Schaltanordnung.

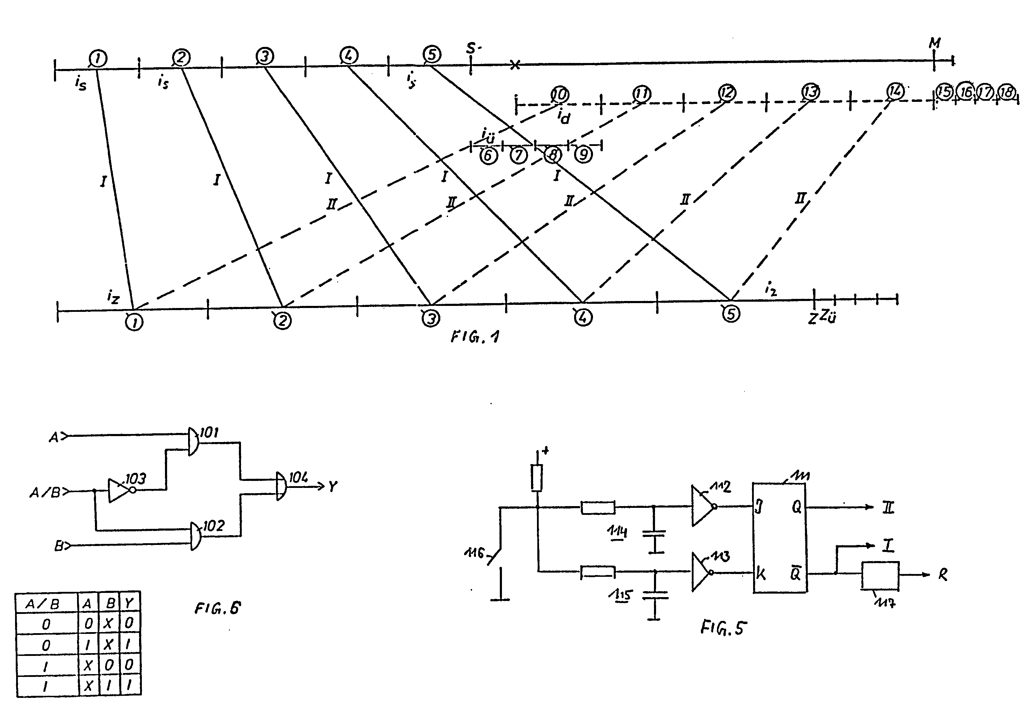

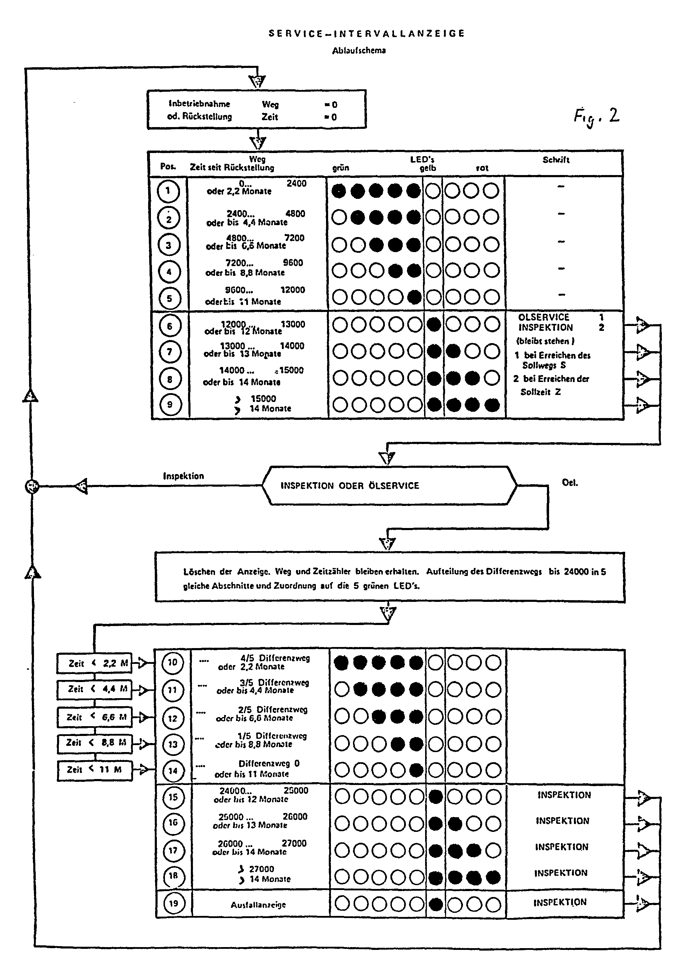

Wie in Fig. 1 zu erkennen ist, ist der zurückgelegte Weg nach einer durchgeführten grossen Wartung („Inspektion" mit umfangreichen Wartungsarbeiten) bzw. bei einem neuen Kraftfahrzeug bis hin zu einem Sollweg S, der bei etwa 12 000 km liegt, aufgeteilt in fünf gleiche Sollweg-Intervalle $i_s$. Wird der Sollweg S durchfahren, so nimmt die Anzeigevorrichtung — ohne Berücksichtigung der Laufzeit – die in Fig. 2 dargestellten Zustände 1 bis 5 nacheinander ein. Diese Zustände sind an den Sollweg-Intervallen $i_s$ angezeichnet. An die Sollweg-Intervalle $i_s$ schliessen sich vier untereinander gleiche Überziehungsweg-Intervalle $i_ü$ an, die etwa halb so gross sind wie die Sollweg-Intervalle $i_s$, d.h. eine Länge von etwa 1000 km besitzen, und die wirksam werden, sofern nach Durchfahren des Sollwegs S keine dann erforderliche kleine Wartung in Form eines Ölwechsels („Ölservice") durchgeführt wird. Den Intervallen $i_ü$ sind Zustände 6 bis 9 der Anzeigevorrichtung zugeordnet.

Wird eine kleine Wartung durchgeführt, so wird der verbleibende Weg bis hin zu einem Maximalweg M in ebenfalls fünf gleiche Differenzweg-Intervalle $i_d$ aufgeteilt, denen Zustände 10 bis 14 der Anzeigevorrichtung entsprechend den Zuständen 1 bis 5 zugeordnet werden. Der Maximalweg M ist doppelt so gröss wie der Sollweg S, d.h. er besitzt eine Länge von 24 000 km. Daran schliessen sich, sofern keine kleine Wartung durchgeführt wird, Überziehungsweg-Intervalle $i_ü'$ entsprechend den Intervallen $i_ü$ an, die wie diese einen Wert von beispielsweise 1000 km besitzen und denen Zustände 15 bis 18 entsprechend den Zuständen 6 bis 9 der Anzeigevorrichtung zugeordnet sind.

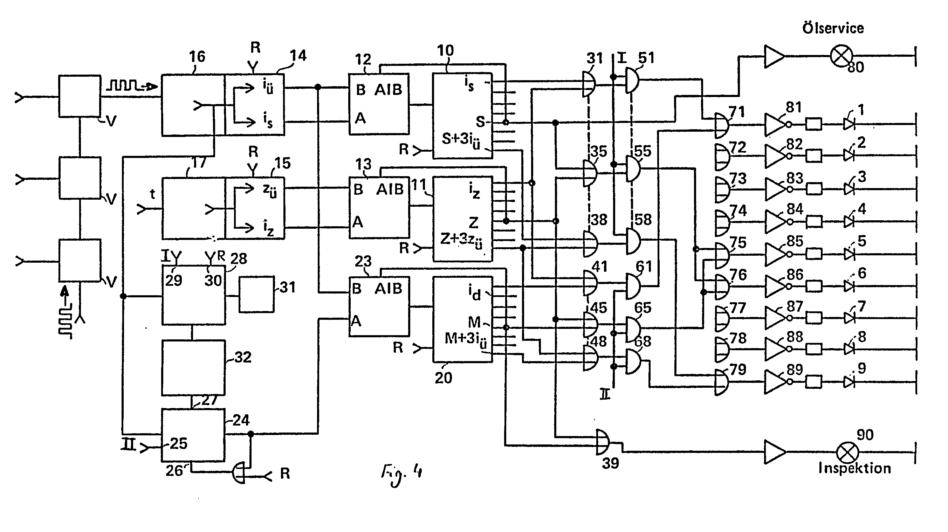

Welchen der Zustände 1 bis 18 die Anzeigevorrichtung tatsächlich einnimmt, hängt neben dem zurückgelegten Weg von der seit der letzten grossen Wartung (bzw. bei neuem Fahrzeug seit der Inbetriebnahme) verstrichenen Laufzeit ab. Diese Zeit ist bestimmt durch eine Sollzeit Z von beispielsweise elf Monaten, nach der in jedem Fall eine grosse Wartung durchgeführt werden muss. Die Sollzeit Z ist ebenfalls unterteilt in fünf gleich grosse Sollzeit-Intervalle $i_z$, die zunächst den Sollweg-Intervallen $i_s$ zugeordnet sind. Die zur Anzeigevorrichtung gehörende, in den Fig. 4 bis 6 dargestellte Schaltanordnung befindet sich dabei in einem weiter unten näher erläuterten Zustand 1. An die Sollzeit Z schliessen sich vier gleich grosse Überziehungszeit-Intervalle $z_ü$ an, die etwa halb so gross sind wie die Sollzeit-Intervalle $i_z$ und somit eine Dauer von etwa einem Monat besitzen. Diese Überziehungszeit-Intervalle sind zunächst den Überziehungsweg-Intervallen $i_ü$ zugeordnet.

Wird der Sollweg S vor Ablauf der Sollzeit Z zurückgelegt und in dem sich anschliessenden Überziehungsweg eine kleine Wartung durchgeführt, so nimmt die Schaltanordnung entsprechend den Fig. 4 bis 6 einen Zustand 2 ein, in dem die Sollzeit-Intervalle $i_z$ nunmehr den Differenzweg-Intervallen $i_d$ und die Überziehungszeit-Intervalle $z_ü$ den Überziehungsweg-Intervallen $i_ü'$ zugeordnet sind. Die Zuordnung der verschiedenen Intervallen in den beiden Zuständen 1 und 2 der Schaltanordnung und damit der Anzeigevorrichtung ist durch durchgezogene bzw. unterbrochene Linien dargestellt.

Die Arbeitsweise der Anzeigevorrichtung ist nun so, dass der Zustand der Anzeigevorrichtung durch dasjenige der beiden zugeordneten Weg- und Zeit-Intervalle bestimmt wird, welches zuerst erreicht wird. Befindet sich die Anzeigevorrichtung beispielsweise im Zustand 2, so wird auf den Zustand 3 umgeschaltet, sobald das zweite Sollweg-Intervall abgelaufen oder, sofern dies früher geschieht, das zweite Sollzeit-Intervall verstrichen ist.

Die Anzeigevorrichtung besteht aus neun Leuchtdioden 1 bis 9, von denen die Dioden 1 bis 5 eine grüne, die Diode 6 eine gelbe und die Dioden 7 bis 9 eine rote Farbe besitzen. Zusätzlich enthält die Vorrichtung ein Schriftfeld, das auch von den Leuchtdioden entfernt angeordnet sein kann, mit den Zuschriften „Ölservice" und „Inspektion".

Die verschiedenen Zustände der Anzeigevorrichtung und die hierfür massgeblichen Bedingungen sind in Fig. 2 als Ablaufschema dargestellt und mit 1 bis 9 gekennzeichnet. Diese Zustände beziehen sich auf die Zuordnung in Fig. 1 mit durchgezogenen Linien zwischen Sollweg- bzw. Überziehungsweg-Intervallen $i_s$, $i_ü$ und Sollzeit- bzw. Überziehungszeit-Intervallen $i_z$, $z_ü$.

Wird nach Ablauf der Sollzeit eine grosse Wartung durchgeführt, so ist dann wieder das Ablaufschema I massgebend. Wird hingegen vor Ablauf der Sollzeit und nach Zurücklegen des Sollwegs eine kleine Wartung („Ölservice") durchgeführt, so ist das Ablaufschema II und die hierfür gegebene, in Fig. 1 durch gestrichelte Linien dargestellte Zuordnung massgebend. Zur Unterscheidung der beiden Wartungsarten dient das in den Ablaufschemen I und II dargestellte Schriftfeld. In diesem wird eine nur nach Zurücklegen des Sollwegs erforderliche kleine Wartung durch die Schrift „Ölservice" angezeigt, während eine grosse Wartung nach Ablauf der Sollzeit bzw. nach Zurücklegen des Maximalwegs durch „Inspektion" angezeigt wird.

Bei Durchlaufen der Positionen 1 bis 9 erlöschen zunächst der Reihe nach die grünen Leuchtdioden 1 bis 5. Im Zustand 6 erscheint mit der entsprechenden Anzeige im Schriftfeld die gelbe Leuchtdiode 6 und im weiteren entsprechend den Überziehungs-Intervallen die Leuchtdioden 7 bis 9. Die Schaltung der Leuchtdioden 1 bis 5 ist dabei so gewählt, dass sie bei Schliessen des Zündstromkreises, sofern sie entsprechend dem zurückgelegten Weg bzw. der verstrichenen Zeit wirksam sind, eingeschaltet werden. Unmittelbar bei oder nach dem Anlassen des Kraftfahrzeugs erlöschen sie jedoch wieder. Sie werden hierzu beispielsweise mit Hilfe des serienmässigen Öldruckschalters ausgeschaltet.

Die Leuchtdioden 6 bis 9 hingegen werden in den entsprechenden Zuständen bleibend eingeschaltet und erinnern eindringlich an die Notwendigkeit einer Wartung.

Im Falle einer kleinen Wartung ("Ölservice") schliessen sich die Zustände 10 bis 18 an, die den Zuständen 1 bis 9 hinsichtlich der Schaltung der Leuchtdioden 1 bis 9 entsprechen. Jedoch erscheint beim Maximalweg M bzw. bei der Sollzeit S im Schriftfeld nun der Hinweis "Inspektion" und macht auf die Notwendigkeit einer grossen Wartung aufmerksam. Zusätzlich ist ein Zustand 19 möglich, bei dem wie im Zustand 15 nur die Leuchtdiode 6 eingeschaltet ist und im Schriftfeld der Hinweis "Inspektion" erscheint. Dieser Zustand kann beispielsweise dann angezeigt werden, wenn ein Defekt der Anzeigevorrichtung vorliegt oder wenn eine Manipulation an der Anzeigevorrichtung angezeigt werden soll.

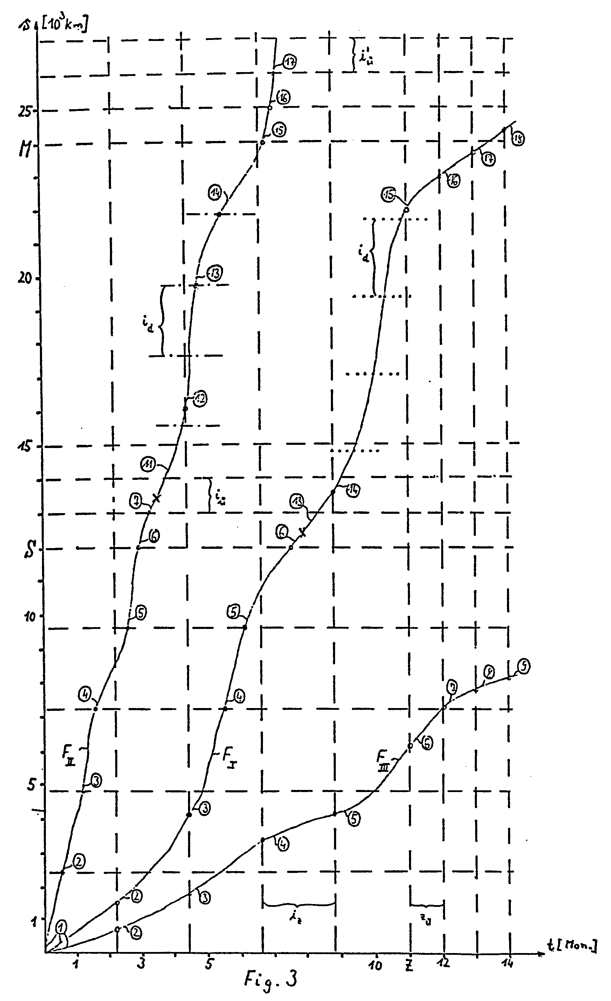

In Fig. 3 sind anhand eines Weg/Zeit-Diagramms drei Fahrer mit unterschiedlichem Fahrverhalten entsprechend den Kurven $F_I$ bis $F_{III}$ und die sich ergebenden Zustände der Anzeigevorrichtung eingezeichnet.

Die Kurve $F_I$ entspricht einem durchschnittlichen Fahrverhalten. Die Zustände 2 und 3 der Anzeigevorrichtung werden durch Überschreiten der Grenzen der beiden Sollzeit-Intervalle erreicht. Die Zustände 4, 5 und 6 hingegen werden durch Überschreiten der entsprechenden Grenzen der Sollweg-Intervalle erreicht.

Da die Sollzeit noch nicht abgelaufen ist, erscheint am Ende des Sollwegs S im Schriftfeld der Hinweis "Ölservice". Dieser wird innerhalb des ersten Überziehungsweg-Intervalls $i_ü$ durchgeführt und ist durch ein Kreuz gekennzeichnet.

Der bis zum Maximalweg M verbleibende Differenzweg wird in fünf gleiche Intervalle eingeteilt (vgl. Fig. 1) und den unveränderten Sollzeit-Intervallen zugeordnet. Der eingeschaltete Zustand der Anzeigevorrichtung wird unmittelbar beim Ölservice durch die abgelaufene Zeit bestimmt; da das vierte Sollzeit-Intervall massgeblich ist, wird beim Ölservice der Zustand 13 eingestellt. Durch Zeitablauf erfolgt daraufhin die Einstellung der Zustände 14, 15, 16 und 17. Gleichzeitig beim Zustand 15 erscheint im Schriftfeld der Hinweis "Inspektion". Wird diese durchgeführt, so wird wieder der Zustand 1 eingestellt, sämtliche Weg- und Zeitzähler werden auf die Ausgangsposition zurückgesetzt.

Die Kurve $F_{II}$ zeigt ein Fahrverhalten, bei dem in relativ kurzer Zeit eine grosse Wegstrecke zurückgelegt wird. Die Zustände 2 bis 7 werden durch Überschreiten der entsprechenden Sollweg-Intervall-Grenzen eingestellt. Der Ölservice wird im zweiten Überziehungsweg-Intervall durchgeführt. Die verbleibende Reststrecke bis zum Maximalweg M wird dann in fünf gleiche Differenzweg-Intervalle $i_d$ eingeteilt. Die Grenzen dieser Intervalle sind durch waagrechte, unterbrochene Linien wiedergegeben. Da der Ölservice im zweiten Sollzeit-Intervall durchgeführt wird, wird dabei auch der Zustand 11 entsprechend dem Zustand 2 der Anzeigevorrichtung eingestellt. Der Zustand 12 wird durch Überschreiten des zweiten Sollzeit-Intervalls, die Zustände 13 bis 15 durch Überschreiten der Grenzen des dritten, vierten und fünften Differenzweg-Intervalls erreicht. Sofern eine grosse Wartung nicht durchgeführt wird, werden die Zustände 16 bis 18 durch Überschreiten der entsprechenden Überziehungsweg-Intervalle $i_ü$ eingestellt.

Die Kurve $F_{III}$ schliesslich ist charakteristisch für einen Fahrer, der unterdurchschnittlich wenig fährt. Ausschliesslich durch Überschreiten der Grenzen der Sollzeit-Intervalle werden die Zustände 2 bis 6 eingestellt. Im Schriftfeld erscheint dann der Hinweis "Inspektion". Wird diese nicht ausgeführt, so werden auch die Zustände 7 bis 9 bei Verlassen der Überziehungszeit-Intervalle erreicht.

Eine Schaltanordnung, mit der die Zustände 1 bis 18 der Anzeigevorrichtung in Abhängigkeit von der vergangenen Zeit, dem zurückgelegten Weg und dem Zeitpunkt einer durchgeführten Wartung gesteuert werden, ist in Fig. 4 gezeigt.

Die Leuchtdioden 1 bis 9 werden durch jeweils zwei von drei Schieberegistern 10, 11 und 20 gesteuert, die bei Vorliegen der Zustände 1 bis 9 (Schieberegister 10, 11) bzw. der Zustände 10 bis 18 (Schieberegister 20, 11) wirksam sind. Das Schieberegister 10 ist über einen Multiplexer 12 im Abstand der Sollweg-Intervalle $i_s$ und der Überziehungsweg-Intervalle $i_ü$ getaktet. Das Schieberegister 11 erhält seinen Takt im Abstand der Sollzeit-Intervalle $i_z$ und der Überziehungszeit-Intervalle $z_ü$. Das Schieberegister 20 entspricht etwa dem Schieberegister 10 und wird mit Ablauf der Differenzweg-Intervalle $i_d$ und der sich an den Maximalweg M anschliessenden Überziehungsweg-Intervalle $i_ü$ (vgl. Fig. 1) getaktet.

Wie beim Schieberegister 10 ist den Schieberegistern 11 und 20 ein Multiplexer 13 bzw. 23 vorgeschaltet, der die wirksame Taktbreite bestimmt. Die Taktbreite wird geliefert von Vorteilern 14 und 15 sowie einem binären Abwärtszähler 24. Sie besitzt für den Vorteiler 14 Werte von z.B. 1000 und 2400 km entsprechend den Überziehungsweg- und Sollweg-Intervallen, für den Vorteiler 15 Werte von z.B. 1 und 2,2 Monate entsprechend den Überziehungszeit- und Sollzeit-Intervallen und für den Abwärtszähler 24 den Wert eines Differenzweg-Intervalls. Dieses ist gleich ⅕ der Differenz aus Maximalweg und dem bei Durchführen einer kleinen Wartung ("Ölservice") zurückgelegten Weg.

Der 1000- und 2400-km-Ausgang des Vorteilers 14 ist mit Eingängen B und A des Multiplexers 12, der 1-Monat- und 2,2-Monat-Ausgang des Vorteilers 15 mit Eingängen B und A des Multiplexers 13 und der 1000-km-Ausgang des Vorteilers 14 und der Ausgang des Abwärtszählers 24 mit Eingängen B und A des Multiplexers 23 verbunden. Sämtliche Multiplexer werden über Steuereingänge A/B eingestellt.

Der Vorteiler 14 wird durch einen Vorteiler 16 getaktet, der Wegimpulse entsprechend dem zurückgelegten Weg—beispielsweise durch einen an der Hinterachse des Kraftfahrzeugs angebrachten Raddrehzahlsensor gesteuert — erhält, und liefert an seinem Ausgang ein normiertes Taktsignal, das einer zurückgelegten Wegstrecke von 1 km entspricht. Dieses Taktsignal ist zusätzlich dem binären Abwärtszähler 24 zugeführt. Der Vorteiler 15 erhält in zeitlich regelmässigen Abständen von z.B. 0,1 Monate einen Takt, der im Ausgang eines Vorteilers 17 vorliegt. Der Vorteiler 17 seinerseits ist durch einen nicht dargestellten Zeitgeber getaktet.

Der Abwärtszähler 24 besitzt einen Freigabeeingang 25, einen Setzeingang 26 und einen weiteren Eingang 27, über den die berechneten Differenzweg-Intervalle $i_d$ eingegeben werden. Zur Bestimmung des Differenzweg-Intervalls dient ein binärer Abwärtszähler 28 mit einem Freigabeeingang 29 und einem Setzeingang 30, dem das Ausgangssignal des Vorteilers 16 zugeführt wird. Ferner ist der Abwärtszähler 28 mit einem Konstantenspeicher 31 für den Maximalweg M — hier gleich 24000 km — verbunden. An den Abwärtszähler 28 schliesst sich ein binäres Rechenwerk 32 an, das den fünften Bruchteil des Ausgangswerts des Abwärtszählers 28 bildet und an den Abwärtszähler 24 weitergibt.

Die Leuchtdioden 1 bis 9 sind an den jeweils acht zugeordneten Ausgängen der Schieberegister 10, 11 und 20 über ODER-Glieder 31 bis 38 und 41 bis 48, diesen nachgeschaltete UND-Glieder 51 bis 58 bzw. 61 bis 68 und den einander zugeordneten UND-Gliedern 51 und 61, 52 und 62, ..., 58 und 68 über ODER-Glieder 71 bis 79 angeschlossen. Dabei sind die UND-Glieder 51-61, 52-62, 53-63, 54-64, 56-66, 57-67 und 58-68 jeweils auf eines der ODER-Glieder 71-74 und 76-79 geführt, während die UND-Glieder 55-65 an den beiden ODER-Gliedern 75 und 76 angeschlossen sind. Den ODER-Gliedern 71 bis 75 nachgeschaltete Inverter 81 bis 85 sorgen im Gegensatz zu den mit einfachen Verstärkern 86-89 versehenen Leuchtdioden 6 bis 9 dafür, dass die Leuchtdioden 1 bis 5 dann ausgeschaltet sind, wenn mindestens einer der Eingänge der ODER-Glieder 71 bis 75 auf hohem Potential liegt.

Die UND-Glieder 51 bis 58 und 61 bis 68 werden durch eine Steuer- und Rücksetzlogik geschaltet, die neben Fig. 4 als gesonderte Fig. 5 dargestellt ist. Die Logik enthält ein Flip-Flop 111, dessen Eingänge I und K über Inverter 112 und 113 mit RC-Gliedern 114, 115 mit unterschiedlichen Zeitkonstanten angeschlossen sind. Die RC-Glieder 114 und 115 besitzen Zeitkonstanten von z.B. 3 und 10 s. Sie können durch einen Schalter 116 gleichzeitig gemeinsam aktiviert werden.

Wird der Schalter 116 geschlossen, so steuert das RC-Glied 114 und der Inverter 112 zunächst den Eingang J des bistabilen Kippglieds 111 an. Dadurch wird dessen Ausgang $\overline{Q}$ aktiviert und ein Zustand 1 eingestellt, der den Zuständen 1 bis 9 der Anzeigevorrichtung (Fig. 2) zugeordnet ist. Gleichzeitig wird ein Monoflop 117 aktiviert, das die in Fig. 4 mit R bezeichneten Eingänge der dargestellten Schaltelemente mit einem Rücksetzimpuls R versieht. Wird der Schalter 116 längere Zeit, beispielsweise 10 s, gedrückt, so wird das RC-Glied 115 und den Inverter 113 nunmehr der Eingang K des Kippglieds 111 aktiviert, das seinerseits nunmehr auf den Ausgang Q umschaltet. Dadurch wird der Zustand 2 entsprechend den Zuständen 10 bis 18 der Anzeigevorrichtung wirksam.

Die Steuereingänge A/B der Multiplexer 12, 13 und 23 werden durch die Ausgänge der zugeordneten Schieberegister 10, 11 und 20 gesteuert, die dem Sollweg S, der Sollzeit Z und dem Maximalweg M entsprechen. Der Aufbau der Multiplexer 12, 13, 22 und 23 ist in einer gesonderten Fig. 6 zusammen mit der zugehörigen Wahrheitstabelle gezeigt.

Diese Multiplexer enthalten zwei UND-Glieder 101 und 102, die einerseits mit den Eingängen A und B und andererseits über einen Inverter 103 bzw. unmittelbar mit dem Eingang A/B verbunden sind. Die Ausgänge der UND-Glieder 101 und 102 sind auf ein ODER-Glied 104 geführt, dessen Ausgang auf die Schieberegister 10, 11 bzw. 20 geführt ist. Wie aus der Wahrheitstabelle zu erkennen ist, liegt am Ausgang des Multiplexers bei niedrigem Potential des Eingangs A/B unabhängig vom Eingang B der Zustand am Eingang A und bei hohem Potential am Eingang A/B unabhängig vom Eingang A der Zustand des Eingangs B vor. Über den Eingang A/B lässt sich somit festlegen, welcher der Eingänge A bzw. B wirksam ist.

Bei einem neuen Fahrzeug oder nach Durchführen einer grossen Wartung ist der Ausgang $\overline{Q}$ des Flip-Flops 111 wirksam, d.h. die Schaltanordnung von Fig. 4 befindet sich im Zustand 1. In die Vorteiler 16 und 17 gelangen Weg- und Zeitimpulse entsprechend dem zurückgelegten Weg bzw. der vergangenen Zeit und werden an den Vorteiler 14 und den binären Abwärtszähler 28 bzw. den Vorteiler 15 weitergegeben. Die Eingänge A/B der Multiplexer 12 und 13 erhalten zunächst niedriges Potential und schalten somit die Eingänge A der Multiplexer 12 und 13 wirksam. Der Abwärtszähler 24 ist unwirksam, da sein Freigabeeingang 25 nicht belegt ist.

Die Schieberegister 10 und 11 werden im Abstand von 2400 km entsprechend einem Sollweg-Intervall $i_s$ bzw. 2,2 Monaten entsprechend einem Sollzeit-Intervall $i_z$ getaktet. Solange eine derartige Taktung jedoch noch nicht erfolgt ist, d.h. solange weder das erste Sollweg-Intervall zurückgelegt bzw. das erste Sollzeit-Intervall verstrichen ist, sind die (grünen) Leuchtdioden 1 bis 5 eingeschaltet. Diese Einschaltung ist dabei so vorgenommen, dass sie bei Schliessen des Zündstromkreises erfolgt und unmittelbar nach dem Starten des Fahrzeugmotors wieder aufgehoben wird. Hierzu dient beispielsweise ein den Leuchtdioden nachgeschalteter, nicht dargestellter Öldruckschalter.

Ist nunmehr das erste Sollweg-Intervall bzw.

das erste Sollzeit-Intervall abgelaufen, so wird anstelle des Zustands 1 der Zustand 2 der Anzeigevorrichtung (Fig. 2) hergestellt und die Leuchtdiode 1 bleibend ausgeschaltet. Entsprechend der Tabelle von Fig. 2 werden mit weiteren Takten der Schieberegister 10 und 11 die Zustände 3 bis 5 durchfahren.

Wird am Ende des Zustands 5 der Zustand 6 durch Zurücklegen des Sollwegs S erreicht, so wird nunmehr auch die letzte grüne Leuchtdiode 5 ausgeschaltet und die (gelbe) Warnleuchte 6 eingeschaltet. Gleichzeitig erscheint die als Glühlampe 80 dargestellte Leuchtschrift „Ölservice", die vom Ausgang des Schieberegisters 10 angesteuert wird, der dem Sollweg entspricht.

Ist der Zustand 6 jedoch durch Ablauf der Sollzeit Z erreicht, so steuert ein ODER-Glied 39 die als Glühlampe 90 dargestellte Leuchtschrift „Inspektion". Das ODER-Glied 39 wird dabei durch den Ausgang des Schieberegisters 11 angesteuert, der der Sollzeit Z entspricht.

Bei Erreichen des Zustands 6 durch Zurücklegen des Sollwegs bzw. am Ende der Sollzeit wird die für die Schieberegister 10 bzw. 11 massgebende Taktbreite nunmehr verringert, indem über die Eingänge A/B der Multiplexer 12 bzw. 13 deren Eingänge B wirksam geschaltet werden. Die Schieberegister 10 bzw. 11 werden somit – bei Ablauf des Sollwegs S – im Abstand der Übertragungsweg-Intervalle von z.B. 1000 km bzw. bei Ablauf der Sollzeit im Abstand der Überziehungszeit-Intervalle von z.B. 1 Monat getaktet. Die Zustände 7 bis 9 können somit in kürzeren Abständen erreicht werden.

Die bei Ablauf der Sollzeit notwendige Inspektion hat zur Folge, dass sämtliche Schieberegister und sonstige Zähler auf die Ausgangsposition gebracht werden. Hierzu wird der Schalter 116 eine längere Zeit von z.B. 10 s betätigt. Die beschriebene Ansteuerung der Leuchtdioden, entsprechend den Zuständen 1 bis 9, beginnt nunmehr von neuem.

Wird der Zustand 6 hingegen durch Zurücklegen des Sollwegs erreicht, so braucht in diesem Fall lediglich ein Ölservice, die sogenannte kleine Wartung, durchgeführt zu werden. In diesem Fall werden die Zustände 10 bis 17 der Anzeigevorrichtung wirksam. Dies wird mit Hilfe des Schalters 116 erreicht, der für eine relativ kurze Zeit von z.B. 3 s gedrückt wird und damit den Ausgang Q des Flip-Flops 111 aktiviert. Der Ausgang Q liefert dann den mit II bezeichneten Eingängen der UND-Glieder 61 bis 68 hohes Potential.

Bei Aktivieren des Ausgangs Q wird der Freigabeeingang 29 des Abwärtszählers 28 gesperrt. Dieser Zähler enthält somit den Differenzweg zwischen dem Maximalweg M entsprechend dem im Konstantenspeicher 31 enthaltenen Wert und dem bis zum Durchführen des Ölservice zurückgelegten Weg. Das Rechenwerk 32 bildet den fünften Teil dieses Differenzwegs und liefert somit die Differenzweg-Intervalle. Diese Intervalle werden in den Abwärtszähler 24 eingegeben. Dieser ist durch seinen Freigabeeingang 25 nunmehr angesteuert und erhält die Ausgangssignale des Vorteilers 16. Sobald ein Überziehungsweg-Intervall zurückgelegt ist, wird das Schieberegister 20 über den Multiplexer 23 mit seinem wirksamen Eingang A getaktet. Gleichzeitig wird der Setzeingang 26 des Abwärtszählers 24 angesteuert und erneut ein Differenzweg-Intervall eingegeben. Dies wird so lange fortgesetzt, bis der Maximalweg erreicht ist. Sofern die Sollzeit bis dahin noch nicht abgelaufen ist, schaltet der den Maximalweg M des Schieberegisters 20 über den Steuereingang A/B den Eingang B des Multiplexers 23 wirksam. Die Zustände 16, 17 und 18 werden entsprechend den Zuständen 7 bis 9 dann wesentlich schneller erreicht. Gleichzeitig gibt die vom Ausgang des Schieberegisters 20 entsprechend dem Maximalweg M über das ODER-Glied 39 angesteuerte Leuchtschrift (Glühlampe 90) „Inspektion" einen Hinweis auf die Notwendigkeit einer grossen Wartung.

Anstelle des einfachen zurückgelegten Wegs kann auch eine Bewertung der in den Vorteiler 16 gelangenden Wegimpulse entsprechend der Belastung des Fahrzeugmotors vorgenommen werden. Hierzu können beispielsweise zwischen dem Raddrehzahlsensor und dem Vorteiler 16 weitere, andeutungsweise dargestellte Vorteiler V in Reihe eingeschaltet werden, die so lange nicht wirksam sind, wie die diesen Vorteilern zugeordneten Betriebsparameter einen anormalen Wert besitzen. Diese Betriebsparameter können beispielsweise die Kühlwassertemperatur, die Motoröltemperatur oder die Drehzahl sein. Durch entsprechende Beschaltung der Vorteiler lässt sich erreichen, dass die Bewertung in Abhängigkeit von der Grösse, der Dauer oder dem Maximalwert des anormalen Parameters erfolgt. Damit lässt sich eine erforderliche kleine oder grosse Wartung zusätzlich zu der bereits berücksichtigten Betriebsdauer der tatsächlichen Belastung des Fahrzeugmotors anpassen und durch die damit erzielbare genaue Festlegung des Wartungszeitpunkts eine Verlängerung der Wartungs-Intervalle erreichen.

## Patentansprüche

1. Service-Intervall-Anzeigevorrichtung für Kraftfahrzeuge, die nach Zurücklegen eines Sollwegs ein Signal liefert, dadurch gekennzeichnet, dass der Sollweg (S) in mehrere, gleich grosse Sollweg-Intervalle ($i_s$) aufgeteilt ist und dass jedem dieser Intervalle ein eigenes Signalelement zugeordnet ist, das am Ende des Intervalls seinen Schaltzustand ändert.

2. Anzeigevorrichtung nach Anspruch 1, dadurch gekennzeichnet, dass die Signalelemente Kontrolleuchten (1-5) sind, die am Ende ihres Sollweg-Intervalls ($i_s$) erlöschen.

3. Anzeigevorrichtung nach Anspruch 2, dadurch gekennzeichnet, dass die Kontrolleuchten (1-5) vor dem Ende ihres Sollweg-Intervalls ($i_s$) bei Schliessen des Zündstromkreises eingeschaltet und bei oder unmittelbar nach dem Anlassen des Fahrzeugmotors ausgeschaltet werden.

4. Anzeigevorrichtung nach einem der Ansprüche 1 oder 2, dadurch gekennzeichnet, dass gleichzeitig mit dem Erlöschen der Kontrolleuchte (5) für das letzte Sollweg-Intervall ($i_s$) eine Leuchtschrift („Ölservice") bleibend eingeschaltet wird.

5. Anzeigevorrichtung nach einem der Ansprüche 1 bis 4, dadurch gekennzeichnet, dass bei Überschreiten des Sollwegs (S) eine Warnanzeige bleibend eingeschaltet wird.

6. Anzeigevorrichtung nach Anspruch 5, dadurch gekennzeichnet, dass die Warnanzeige eine Warnleuchte (6) mit von den Kontrolleuchten (1-5) unterschiedlicher Farbe ist.

7. Anzeigevorrichtung nach Anspruch 6, dadurch gekennzeichnet, dass die Warnleuchte (6) und weitere Warnleuchten (7-9) nach gleichen Überziehungsweg-Intervallen ($i_ü$) sukzessiv eingeschaltet werden.

8. Anzeigevorrichtung nach Anspruch 7, dadurch gekennzeichnet, dass die Überziehungs-Intervalle ($i_ü$) etwa halb so gross wie die Sollweg-Intervalle ($i_s$) sind.

9. Anzeigevorrichtung nach einem der Ansprüche 1 bis 8, dadurch gekennzeichnet, dass dem Sollweg (S) eine Sollzeit (Z) zugeordnet ist, die in eine der Anzahl von Sollweg-Intervallen ($i_s$) gleiche Anzahl von Sollzeit-Intervallen ($i_z$) aufgeteilt ist und dass der Schaltzustand der Signalelemente auch geändert wird, wenn das jeweilige Sollzeit-Intervall ($i_z$) vor dem entsprechenden Sollweg-Intervall ($i_s$) abgelaufen ist.

10. Anzeigevorrichtung nach einem der Ansprüche 5 bis 9, dadurch gekennzeichnet, dass die Warnanzeige auch bei Überschreiten der Sollzeit (Z) bleibend eingeschaltet wird.

11. Anzeigevorrichtung nach einem der Ansprüche 4 bis 10, dadurch gekennzeichnet, dass bei Ablauf der Sollzeit (Z) eine Leuchtschrift („Inspektion") eingeschaltet wird, die von der nach dem letzten Sollweg-Intervall eingeschalteten Leuchtschrift („Ölservice") verschieden ist.

12. Anzeigevorrichtung nach einem der Ansprüche 7 bis 11, dadurch gekennzeichnet, dass auch den Überziehungsweg-Intervallen ($i_ü$) gleiche Überziehungszeit-Intervalle ($z_ü$) zugeordnet sind, die etwa halb so gross wie die Sollzeit-Intervalle ($i_s$) sind und bei deren Ablauf vor Zurücklegen des zugehörigen Überziehungsweg-Intervalls ebenfalls die Warnleuchten (6-9) eingeschaltet werden.

13. Anzeigevorrichtung nach einem der Ansprüche 1 bis 12, dadurch gekennzeichnet, dass nach Durchführen einer Wartung vor Ablauf der Sollzeit (Z) die Differenz des zurückgelegten Wegs von einem gegenüber dem Sollweg etwa doppelt so grossen Maximalweg (M) in gleiche Differenzweg-Intervalle ($i_d$) aufgeteilt sind, deren Anzahl gleich der Anzahl der Sollweg-Intervalle ($i_s$) ist und die an deren Stelle treten.

14. Anzeigevorrichtung nach Anspruch 13, dadurch gekennzeichnet, dass nach Zurücklegen des Maximalwegs (M) die Warnanzeige wie nach Zurücklegen des Sollwegs (S) eingeschaltet wird.

15. Anzeigevorrichtung nach Anspruch 14, dadurch gekennzeichnet, dass nach Zurücklegen des Maximalwegs (M) dieselbe Leuchtschrift („Inspektion") wie bei Ablauf der Sollzeit (Z) eingeschaltet wird.

16. Schaltanordnung für eine Anzeigevorrichtung nach einem der Ansprüche 9 bis 15, dadurch gekennzeichnet, dass die Kontrolleuchten (1-5) an den entsprechenden Ausgängen eines Weg- und eines Zeitzählers über ODER-Glieder (31-35) angeschlossen sind.

17. Schaltanordnung nach Anspruch 16, dadurch gekennzeichnet, dass die Weg- und Zeitzähler Schieberegister (10, 11) sind, die bei Zurücklegen der Sollweg- bzw. Sollzeit-Intervalle getaktet sind.

18. Schaltanordnung nach Anspruch 17, dadurch gekennzeichnet, dass die Schieberegister (10, 11) weitere Ausgänge besitzen, an denen Warnleuchten (6-9) über ODER-Glieder (36-38) angeschlossen sind und dass die Schieberegister (10, 11) auch bei Zurücklegen der Überziehungsweg- bzw. Überziehungszeit-Intervalle ($i_ü$, $z_ü$) getaktet sind.

19. Schaltanordnung nach einem der Ansprüche 17 oder 18, dadurch gekennzeichnet, dass bei einer Wartung vor Ablauf der Sollzeit (Z) die Kontrolleuchten (1-5) und die Warnleuchten (6-9) auf die Ausgänge eines weiteren Paares von Schieberegistern (11, 20) geschaltet werden, von denen das eine Schieberegister (20) bei jedem Differenzweg- und jedem Überziehungsweg-Intervall ($i_d$, $i_ü$) und das andere Schieberegister (11) entsprechend bei jedem Sollzeit- und jedem Überziehungszeit-Intervall ($i_z$, $z_ü$) getaktet ist.

20. Schaltanordnung nach Anspruch 19, dadurch gekennzeichnet, dass die Umschaltung der Kontroll- und Warnleuchten (1-9) auf die Schieberegisterpaare (10, 11 bzw. 11, 20) mit einer bistabilen Kippschaltung (Flip-Flop 111) erfolgt, deren beide Ausgänge (Q, $\bar{Q}$) UND-Glieder (51-58 bzw. 61-68) für die Ausgänge der Schieberegister (10, 11 bzw. 11, 20) steuern und an deren beide Eingänge RC-Glieder (114, 115) mit unterschiedlichen Zeitkonstanten angeschlossen sind, die durch einen gemeinsamen Schalter (116) gleichzeitig aktiviert werden.

21. Schaltanordnung nach einem der Ansprüche 19 oder 20, dadurch gekennzeichnet, dass die Taktsteuerung der Schieberegister durch einen Multiplexer (12, 13, 23) (Umschalter) erfolgt, der die den Sollweg-, Überziehungsweg- oder Differenzweg-Intervallen bzw. den Sollzeit- und Überziehungszeit-Intervallen zugeordneten Ausgänge von zugehörigen Vorteilern (14, 15, 24) aktiviert.

## Claims

1. A service-interval indicating device for motor vehicles, which delivers a signal after a required distance has been covered, characterized in that the required distance (S) is divided up into a plurality of required-distance intervals ($i_s$) of equal magnitude, and in that for each of these intervals there is a separate signalling element which changes its switching position at the end of the interval.

2. An indicating device according to Claim 1, characterized in that the signal elements are control lights (1-5) which are extinguished at the end of their required-distance interval ($i_s$).

3. An indicating device according to Claim 2, characterized in that the control lights (1-5) are switched on before the end of their required-distance interval ($i_s$) when the ignition current circuit is closed, and are switched off on start-up of the vehicle engine or immediately thereafter.

4. An indicating device according to Claim 1 or 2, characterized in that, simultaneously with the extinguishing of the control light (5) for the last required-distance interval ($i_s$), illuminated written matter („Oil Service") is switched on and remains so.

5. An indicating device according to any one of Claims 1 to 4, characterized in that, when the required distance (S) is exceeded, a warning indication is switched on and remains so.

6. An indicating device according to Claim 5, characterized in that the warning indication is a warning light (6) having a colour different from that of the control lights (1-5).

7. An indicating device according to Claim 6, characterized in that the warning light (6) and further warning lights (7-9) are successively switched on following like excess-travel intervals ($i_ü$).

8. An indicating device according to Claim 7, characterized in that the excess-travel intervals ($i_ü$) are approximately twice as great as the required-distance intervals ($i_s$).

9. An indicating device according to any one of Claims 1 to 8, characterized in that a required time (Z) is associated with the required distance (S), which time is divided into a number of required-time intervals ($i_z$) that is equal to the number of required-distance intervals ($i_s$), and in that the switching position of the signal elements is also changed when each required-time interval ($i_z$) elapses before the corresponding required-distance interval ($i_s$).

10. An indicating device according to any one of Claims 5 to 9, characterized in that the warning indication is also switched on and remains so when the required time (Z) is exceeded.

11. An indicating device according to any one of Claims 4 to 10, characterized in that, when the required time (Z) elapses, illuminated written matter („Inspection") is switched on, this differing from the illuminated written matter („Oil Service") switched on after the last required-distance interval.

12. An indicating device according to any one of Claims 7 to 11, characterized in that like excess-time intervals ($z_ü$) are also associated with the excess-distance intervals ($i_ü$), which excess-time intervals are approximately twice as great as the required time intervals ($i_z$) and when they elapse, the warning lights (6-9) are likewise switched on before the associated excess-distance interval has been covered.

13. An indicating device according to any one of Claims 1 to 12, characterized in that, after an inspection has been carried out and before expiry of the required time (Z), the difference between the distance covered and a maximum value (M), which is approximately twice as great as the required distance, is divided into equal differential distance intervals ($i_d$), the number of which is equal to the number of required-distance intervals ($i_s$) and which occur in place thereof.

14. An indicating device according to Claim 13, characterized in that, after the maximum distance (M) has been covered, the warning indication is switched on as when the required distance (S) has been covered.

15. An indicating device according to Claim 14, characterized in that, after the maximum distance (M) has been covered, the same illuminated written matter („Inspection") as when the required time (Z) has elapsed is switched on.

16. A switching arrangement for an indicating device according to Claims 9 to 15, characterized in that the control lights (1-5) are connected to the corresponding outputs of a distance counter and a time counter by way of OR-members (31-35).

17. A switching arrangement according to Claim 16, characterized in that the distance counter and the time counter are shift registers (10,11) which are cadenced when the required-distance or required-time intervals are covered.

18. A switching arrangement according to Claim 17, characterized in that the shift registers (10, 11) have further outputs to which warning lights (6-9) are connected by way of OR-members (36-38), and in that the shift registers (10, 11) are also cadenced when the excess-distance or excess-time intervals ($i_ü$, $z_ü$) have been covered.

19. A switching arrangement according to Claim 17 or 18, characterized in that, during inspection before the required time (Z) has elapsed, the control lights (1-5) and the warning lights (6-9) are switched to the outputs of a further pair of shift registers (11,20), one of which, the shift register (20), is cadenced at each differential-distance interval and each excess-distance interval ($i_d$, $i_ü$) and the other shift register (11) is correspondingly cadenced at reach required-time and each excess-time interval ($i_z$, $z_ü$).

20. A switching arrangement according to Claim 19, characterized in that the control and warning lights (1-9) are switched to the pairs of shift registers (10, 11; 11, 20) by means of a bistable oscillator (flip-flop 111) whose outputs (Q, $\overline{Q}$) control AND-members (51-58; 61-68) for the outputs of the shift registers (10, 11; 11, 20), to the two inputs of which oscillator are connected RC-members (114, 115) with different time constants, which latter members are simultaneously activated by a common switch (116).

21. A switching arrangement according to Claim 19 or 20, characterized in that the cadence control of the shift registers is achieved by a multiplexer (12, 13, 23) (reversing switch), which actuates the outputs of associated input attenuators (14, 15, 24), which outputs are associated with the required-distance, excess-distance or differential-distance intervals or the required-time and excess-time intervals.

## Revendications

1. Indicateur d'intervalle de révision pour des véhicules à moteur qui fournit un signal après qu'un parcours de consigne est effectué, indicateur caractérisé en ce que le parcours de consigne (S) est subdivisé en plusieurs intervalles de parcours de consigne ($i_s$) de même valeur et en ce que, à chacun de ces intervalles, est associé un élément de signalisation propre qui change d'état de commutation à la fin de l'intervalle.

2. Indicateur selon la revendication 1, caractérisé en ce que les éléments de signalisation sont des voyants de contrôle (1-5) qui s'éteignent à la fin de leur intervalle de parcours de consigne ($i_s$).

3. Indicateur selon la revendication 2, caractérisé en ce que les voyants de contrôle (1-5) sont mis en œuvre avant la fin de leur intervalle de parcours de consigne ($i_s$) lors de la fermeture du circuit d'allumage et en ce qu'ils sont de nouveau coupés lors du démarrage du moteur ou immédiatement après.

4. Indicateur selon l'une des revendications 1 ou 2, caractérisé en ce que, en même temps que les voyants de contrôle (5) s'éteignent, une inscription lumineuse («vidange d'huile») est branchée en permanence pour le dernier intervalle de parcours de consigne ($i_s$).

5. Indicateur selon l'une des revendications 1 à 4, caractérisé en ce que, lors du dépassement du parcours de consigne (S), on branche en permanence un indicateur d'avertissement.

6. Indicateur selon la revendication 5, caractérisé en ce que l'indicateur d'avertissement est un voyant d'avertissement (6) de couleur différente de celle des voyants de contrôle (1-5).

7. Indicateur selon la revendication 6, caractérisé en ce que le voyant d'avertissement (6) et les autres voyants d'avertissement (7-9) sont mis en œuvre successivement après des intervalles de confirmation identiques ($i_ü$).

8. Indicateur selon la revendication 7, caractérisé en ce que les intervalles de confirmation ($i_ü$) sont sensiblement de moitié aussi grands que les intervalles de parcours de consigne ($i_s$).

9. Indicateur selon l'une des revendications 1 à 8, caractérisé en ce qu'une durée de consigne (Z) est associée au parcours de consigne (S) et en ce qu'elle est subdivisée en un nombre d'intervalles de durée de consigne ($i_z$) égal au nombre d'intervalles de parcours de consigne ($i_s$) et en ce que l'état de commutation des éléments de signalisation change également lorsque l'intervalle de durée de consigne correspondant ($i_z$) est terminé avant l'intervalle de parcours de consigne ($i_s$) correspondant.

10. Indicateur selon l'une des revendications 5 à 9, caractérisé en ce que l'indicateur d'avertissement se branche également en continu lors du dépassement de la durée de consigne (Z).

11. Indicateur selon l'une des revendications 1 à 10, caractérisé en ce que, après la durée de consigne (Z), une inscription lumineuse («révision») est mise en œuvre, indication qui est différente de l'indication lumineuse («vidange d'huile») mise en œuvre après le dernier intervalle de parcours de consigne.

12. Indicateur selon l'une des revendications 1 à 11, caractérisé en ce que les intervalles de parcours de confirmation ($i_ü$) sont associés à des intervalles de durée de confirmation correspondants ($z_ü$) qui sont sensiblement de moitié aussi grands que les intervalles de durée de consigne ($i_s$) à la fin desquels, avant que ne soient parcourus les intervalles de parcours de confirmation correspondants, les voyants d'avertissement (6-9) sont également mis en œuvre.

13. Indicateur selon l'une des revendications 1 à 12, caractérisé en ce que, après avoir effectué une révision avant la fin de la durée de consigne (Z), la différence entre le parcours effectué et un parcours maximal (M) sensiblement double du parcours de consigne est divisée en des intervalles de parcours de différence ($i_d$) identiques dont le nombre est égal au nombre des intervalles de parcours de consigne ($i_s$) et remplaçant ceux-ci.

14. Indicateur selon la revendication 13, caractérisé en ce que, après avoir effectué le parcours maximal (M), l'indicateur d'avertissement est mis en œuvre, comme après que le parcours de consigne (S) est parcouru.

15. Indicateur selon la revendication 14, caractérisé en ce que, après avoir effectué le parcours maximal (M), la même inscription lumineuse («révision») que celle à la fin de la durée de consigne (Z) se met en œuvre.

16. Circuit pour un indicateur selon l'une des revendications 9 à 15, caractérisé en ce que les voyants de contrôle (1-5) sont reliés aux sorties correspondantes d'un compteur de parcours et de temps par des portes OU (31-35).

17. Circuit selon la revendication 16, caractérisé en ce que les registres à décalage du compteur de parcours et de temps (10, 11) sont commandés en cadence à la fin des intervalles de parcours de consigne ou de durée de consigne.

18. Circuit selon la revendication 17, caractérisé en ce que les registres à décalage (10, 11) ont d'autres sorties auxquelles sont reliés les voyants d'avertissement (6-9) par des portes OU (36-38) et en ce que les registres à décalage (10, 11) sont commandés en cadence lorsque sont exécutés les intervalles de parcours de confirmation ou de durée de confirmation ($i_ü$, $z_ü$).

19. Circuit selon l'une des revendications 17 ou 18, caractérisé en ce que, pour une révision avant la fin de la durée de consigne (Z), les voyants de contrôle (1-5) et les voyants d'avertissement (6-9) sont commutés sur les sorties d'une autre paire de registres à décalage (11, 20) parmi lesquels un registre à décalage (20) est commandé en cadence par chaque intervalle de parcours de différence et par chaque intervalle de parcours de confirmation ($i_d$, $i_ü$), et en ce que l'autre registre à décalage (11) est commandé de façon correspon-

dante par chaque intervalle de durée de consigne et par chaque intervalle de durée de confirmation ($i_z$, $z_ü$).

20. Schéma selon la revendication 19, caractérisé en ce que la commutation des voyants de contrôle et d'avertissement (1-9) se fait par une bascule bistable (flip-flop 111) dont les deux sorties ($Q$, $\overline{Q}$) commandent des portes ET (51-58 et 61-68) pour les sorties des registres à décalage (10, 11; 11, 20) et dont les deux entrées sont reliées à des éléments RC (114, 115) à constantes de temps différentes et qui sont activées simultanément par un commutateur commun (116).

21. Schéma selon l'une des revendications 19 ou 20, caractérisé en ce que la commande en cadence des registres à décalage se fait par un multiplexeur (12, 13, 23) (inverseur) qui active les sorties des diviseurs correspondants (14, 15, 24), sorties associées aux intervalles de parcours de consigne, de parcours de confirmation ou de parcours de différence et aux intervalles de durée de consigne et de durée de confirmation.

FIG. 1

FIG. 5

FIG. 6

| A/B | A | B | Y |
|-----|---|---|---|
| 0 | 0 | X | 0 |
| 0 | 1 | X | 1 |
| 1 | X | 0 | 0 |
| 1 | X | 1 | 1 |

0 057 821

**SERVICE—INTERVALLANZEIGE**
Ablaufschema

*Fig. 2*

Inbetriebnahme / od. Rückstellung — Weg = 0, Zeit = 0

| Pos. | Weg / Zeit seit Rückstellung | grün | | | LED's gelb | rot | Schrift |
|---|---|---|---|---|---|---|---|
| 1 | 0... 2400 oder 2,2 Monate | | | | | | – |
| 2 | 2400... 4800 oder bis 4,4 Monate | | | | | | – |
| 3 | 4800... 7200 oder bis 6,6 Monate | | | | | | – |
| 4 | 7200... 9600 oder bis 8,8 Monate | | | | | | – |
| 5 | 9600... 12000 oder bis 11 Monate | | | | | | – |
| 6 | 12000... 13000 oder bis 12 Monate | | | | | | OLSERVICE 1 / INSPEKTION 2 |
| 7 | 13000... 14000 oder bis 13 Monate | | | | | | (bleibt stehen) / 1 bei Erreichen des Sollwegs S |
| 8 | 14000... ≤15000 oder bis 14 Monate | | | | | | 2 bei Erreichen der Sollzeit Z |
| 9 | > 15000 / > 14 Monate | | | | | | |

INSPEKTION ODER ÖLSERVICE

Inspektion / Oel.

Löschen der Anzeige. Weg und Zeitzähler bleiben erhalten. Aufteilung des Differenzwegs bis 24000 in 5 gleiche Abschnitte und Zuordnung auf die 5 grünen LED's.

| Zeit < 2,2 M | 10 | .... 4/5 Differenzweg oder 2,2 Monate |
| Zeit < 4,4 M | 11 | ... 3/5 Differenzweg oder bis 4,4 Monate |
| Zeit < 6,6 M | 12 | ... 2/5 Differenzweg oder bis 6,6 Monate |
| Zeit < 8,8 M | 13 | ... 1/5 Differenzweg oder bis 8,8 Monate |
| Zeit < 11 M | 14 | .... Differenzweg 0 oder bis 11 Monate |

| Pos. | Weg / Zeit | LED's | Schrift |
|---|---|---|---|
| 15 | 24000... 25000 oder bis 12 Monate | | INSPEKTION |
| 16 | 25000... 26000 oder bis 13 Monate | | INSPEKTION |
| 17 | 26000... 27000 oder bis 14 Monate | | INSPEKTION |
| 18 | > 27000 / > 14 Monate | | INSPEKTION |
| 19 | Ausfallanzeige | | INSPEKTION |

15

Fig. 3

Fig. 4

Ölservice

0 057 821

19